# DEMANDE DE BREVET EUROPEEN

(11) **EP 4 353 873 A1**
(43) Date de publication de la demande: **17.04.2024**
(21) Numéro de dépôt: 22200483.0
(22) Date de dépôt: 10.10.2022
(51) Int. Cl.: C25B 1/04, C25B 9/75

(54) **PROCÉDÉ D'ASSEMBLAGE D'UNE PILE D'ÉLÉMENTS ENTRE EUX**

(71) Demandeur: John Cockerill Hydrogen Belgium, 4100 Seraing (BE)
(72) Inventeur: D'AMBROSIO, David, 4100 Seraing (BE); VANHÉE, Luc, 4100 Seraing (BE)
(74) Mandataire: Cabinet Boettcher

(57) **Abrégé**

Procédé d'assemblage d'une pile d'éléments, comprenant les étapes de :
- Assembler individuellement des sous-ensembles desdits éléments,
- Assembler les sous-ensembles entre eux en agençant un joint entre chaque sous-ensemble pour former la pile d'éléments,
- Appliquer des phases successives de chauffage et de refroidissement à la pile d'éléments en appliquant au moins un serrage de la pile d'éléments entre deux phases différentes de chauffage et de refroidissement.

## Description

L'invention concerne un procédé d'assemblage d'une pile d'éléments entre eux.

L'invention concerne de préférence, mais de manière non limitative, un procédé d'assemblage d'une pile d'électrolyseur.

### ARRIERE PLAN DE L'INVENTION

L'architecture globale d'une pile d'électrolyseur (généralement désigné par le terme de « stack d'électrolyseur ») est usuellement constituée d'un bloc de cellules électrolytiques, qui sont empilées en série d'un point de vue électrique et en parallèle d'un point de vue fluidique, et de joints.

Chaque cellule électrolytique a pour but de favoriser l'électrolyse d'une solution électrolytique (eau alcaline, eau pure, eau non purifiée, sel, solution aqueuse de chlorure, solution aqueuse de bromure, solution aqueuse d'acide chlorhydrique, etc...). Par exemple, la fonctionnalité d'une pile d'électrolyseur est de favoriser la réaction de production de dihydrogène (H2) et de dioxygène (O2) gazeux résultant de la dissociation de l'eau après avoir injecté un courant électrique continu dans une solution alcaline, généralement de l'hydroxyde de potassium (KOH) ou de l'hydroxyde de sodium (NaOH). Chaque cellule électrolytique, considérée comme une pièce principalement métallique et conductrice (mais dont certaines parties peuvent être non-métalliques), est composée généralement de deux plaques bipolaires, encadrant deux intercalaires (plus connus sous le terme anglais de « flow field material »), encadrant eux-mêmes deux électrodes généralement sous forme de plaques ou de grilles ou de tissus métalliques. Dans le cas d'une pile d'électrolyseur alcalin, lesdites électrodes sont généralement en nickel. Les deux électrodes (une cathode et une anode) sont séparées par une membrane (encore appelée diaphragme ou séparateur poreux dans le cas de l'électrolyseur alcalin), qui assure l'isolation électrique entre les deux électrodes, la séparation des gaz ainsi que la conduction ionique au sein de la cellule électrolytique.

L'intercalaire a deux fonctionnalités : i) fournir un chemin métallique de faible résistivité entre chaque plaque bipolaire et l'électrode associée et ii) permettre une circulation appropriée de la solution électrolytique pour le refroidissement de la pile d'électrolyseur et le transport des gaz générés.

Le nom de plaque bipolaire vient du fait que comme les cellules électrolytiques sont toutes accolées les unes aux autres, une plaque bipolaire N aura un potentiel :
- plus élevé par rapport à la plaque bipolaire N+1 en aval, de sorte que la plaque bipolaire N jouera le rôle d'anode au sein d'une cellule électrolytique définie par les plaques bipolaires N et N+1 ;
- plus faible par rapport à la plaque bipolaire N-1 en amont, de sorte que la plaque bipolaire N jouera le rôle de cathode au sein d'une cellule électrolytique définie par les plaques bipolaires N-1 et N.

Parmi les autres pièces métalliques, en plus des plaques bipolaires, sont répertoriées les plaques de distribution (qui permettent l'alimentation et la distribution électrique des cellules électrolytiques) ainsi que les plaques de fond (permettant de délimiter l'ensemble des cellules électrolytiques et d'assurer le serrage desdites cellules entre elles et leur étanchéité).

En effet, la pile d'électrolyseur se termine par deux plaques de fond situées juste avant la première cellule électrolytique et juste après la dernière cellule électrolytique empilées, en d'autres termes une plaque de fond est localisée en amont du bloc de cellules électrolytiques et l'autre plaque de fond est placée en aval de ce dernier en vue de délimiter physiquement les deux extrémités dudit bloc de cellule électrolytique.

La solution électrolytique présente dans chaque cellule électrolytique ainsi que les gaz produits par l'électrolyse (tels que l'hydrogène gazeux, l'oxygène gazeux, le chlore gazeux et le gaz halogène ...) ne doivent pas fuir du bord du diaphragme vers l'extérieur de la cellule électrolytique considérée mais doivent circuler uniquement par les conduites dédiées (chaque conduite étant dédiée soit à l'électrolyte seul, soit à l'électrolyte mélangé à l'un des gaz, en tenant compte que les deux gaz ne peuvent également pas se mélanger entre eux).

La pile d'électrolyseur ne peut donc fonctionner en continu si une fuite est constatée, ladite fuite provenant soit de la solution électrolytique, soit des gaz générés par l'électrolyse, soit d'une quelconque autre substance. Dans bon nombre de cas alors, divers problèmes ayant une conséquence négative sur l'environnement mais aussi sur la sécurité des opérateurs surgissent en présentant un degré de gravité variable tout en considérant que ce dernier peut atteindre une valeur significativement élevée liée à des conséquences irréversibles.

Classiquement, dans une cellule électrolytique telle que celle décrite ci-avant, le montage suivi en vue d'éviter une quelconque fuite issue de la solution électrolytique, du ou des gaz généré (s) par l'électrolyse et/ou d'une quelconque autre substance, depuis le bord du diaphragme de la cellule électrolytique vers l'extérieur de ladite cellule électrolytique, repose sur l'utilisation de plusieurs joints minces en forme de plaque ou plusieurs anneaux toriques (« O-ring » en anglais), et souvent en élastomère, de sorte que lesdits joints ou anneaux soient disposés entre l'anode et la cathode ou la membrane d'une cellule électrolytique, ou directement entre deux plaques bipolaires adjacentes. Ainsi, le diaphragme est pris en sandwich entre ces différents éléments d'étanchéité.

Si ces joints présentent de bonnes propriétés d'étanchéité, ils peuvent être pénalisés à cause du phénomène de fluage qui présente en outre une intensité plus ou moins importante selon la qualité et la composition du matériau employé. De la sorte, si de tels joints sont employés, l'étanchéité de la pile d'électrolyseur finit par se trouver détériorée de façon générale (et même de manière plus spécifique au sein de chaque cellule électrolytique). En outre ce phénomène de fluage arrive d'autant plus rapidement si un des facteurs influents, tel que la température, vient provoquer des effets non désirés sur le joint considéré.

### OBJET DE L'INVENTION

Un but de l'invention est de proposer une solution permettant d'assurer une bonne étanchéité dans un assemblage d'une pile d'éléments entre eux et ce sur le long terme.

### RESUME DE L'INVENTION

A cet effet, on prévoit, selon l'invention, un procédé d'assemblage d'une pile d'éléments, comprenant les étapes de :
- Assembler individuellement des sous-ensembles desdits éléments,
- Assembler les sous-ensembles entre eux en agençant un joint entre chaque sous-ensemble pour former la pile d'éléments,
- Appliquer des phases successives de chauffage et de refroidissement à la pile d'éléments en appliquant au moins un serrage de la pile d'éléments entre deux phases différentes de chauffage et de refroidissement.

Les inventeurs ont pu constater de manière étonnante qu'appliquer des serrages successifs, à des températures différentes, constituait un moyen de contrôler le fluage des joints en le provoquant prématurément mais volontairement afin de le supprimer au maximum avant la réelle mise en service de la pile d'éléments.

En particulier, l'invention permet d'atteindre une grande stabilité mécanique au niveau du matériau du joint par l'alternance de sollicitations thermiques (chauffage et refroidissement des éléments) et mécanique (compression des éléments).

L'invention permet ainsi d'assurer une bonne étanchéité finale de la pile d'éléments et ce même sur le long terme et par exemple sur une échelle de temps de 10 à 20 ans. L'invention s'avère particulièrement adaptée pour l'assemblage de pile d'éléments de grandes dimensions. Optionnellement, la pile d'éléments est une pile d'électrolyseur, les sous-ensembles étant ainsi des couples de demi-cellules électrolytiques.

Le procédé permet ainsi d'assurer une bonne étanchéité finale de la pile d'électrolyseur et ce même sur le long terme et par exemple sur une échelle de temps de 10 à 20 ans.

Le procédé s'avère particulièrement adaptée pour être utilisée dans une pile d'électrolyseur de grandes dimensions dans laquelle les plaques bipolaires peuvent atteindre plusieurs mètres-carrés de surface d'électrodes par cellule électrolytique et/ou dans une pile d'électrolyseur destinée à travailler à haute pression (par exemple à une pression à une valeur comprise entre 1 et 3 Mégapascals et par exemple une pression à une valeur comprise entre 3 et 5 Mégapascals et par exemple à une pression supérieure à 5 Mégapascals). Optionnellement, la pile d'éléments est une pile d'électrolyseur, les sous-ensembles étant ainsi des couples de demi-cellules électrolytiques.

Optionnellement le procédé comporte une étape de pré-serrage de la pile d'éléments avant l'étape d'application des phases successives de chauffage et de refroidissement à la pile d'éléments en appliquant au moins un serrage de la pile d'éléments entre deux phases différentes de chauffage et de refroidissement.

Optionnellement l'étape de pré-serrage s'effectue par paliers.

Optionnellement on chauffe les éléments par injection de vapeur dans les éléments.

Optionnellement la vapeur est de la vapeur d'eau. Optionnellement on chauffe les éléments par injection d'eau chaude dans les éléments.

Optionnellement le refroidissement des éléments est forcé.

Optionnellement le refroidissement des éléments est naturel.

Optionnellement on effectue au moins deux itérations des phases suivantes :
- Chauffage de l'intérieur de la pile d'éléments,
- Serrage des différents éléments entre eux,
- Refroidissement des différents éléments entre eux,
- Serrage des différents éléments entre eux. Optionnellement on arrête les itérations lorsqu'au moins un taux de compression prédéfini d'au moins un joint de la pile d'élément est atteint.

Optionnellement au moins un sous-ensemble est assemblé par fixation de deux plaques bipolaires entre elles de sorte à serrer au moins un joint entre les deux plaques. Optionnellement un unique joint est serré entre les deux plaques bipolaires.

Optionnellement la pile d'élément est agencée verticalement et/ou horizontalement.

D'autres caractéristiques et avantages de l'invention ressortiront à la lecture de la description qui suit d'un mode de réalisation particulier et non limitatif de l'invention.

### BREVE DESCRIPTION DES DESSINS

Il sera fait référence aux dessins annexés, parmi lesquels :

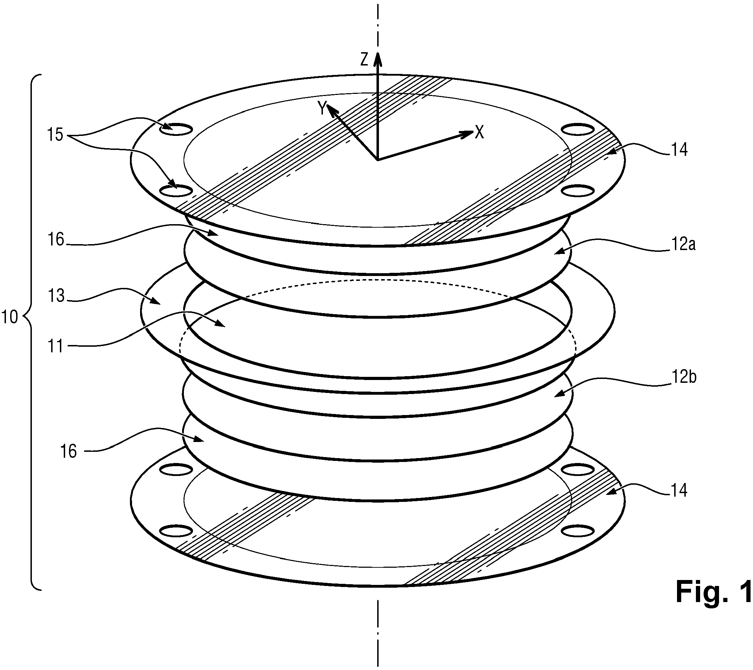

[Fig. 1] la figure 1 est une vue schématique éclatée d'une cellule électrolytique d'une pile d'électrolyseur assemblée selon un mode de réalisation particulier de l'invention,

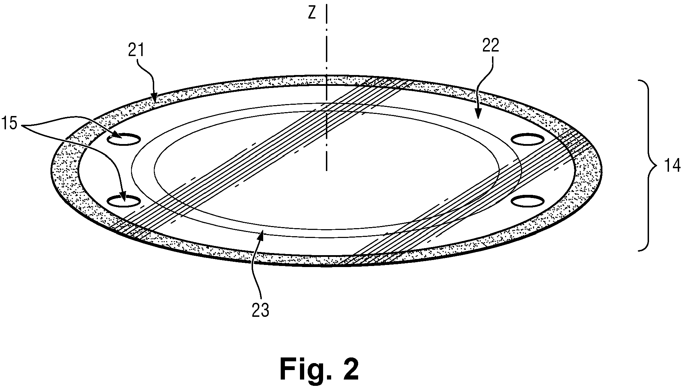

[Fig. 2] la figure 2 est une vue en perspective d'une plaque bipolaire de la cellule électrolytique représentée à la figure 1,
[Fig. 3a] la figure 3a est une vue en coupe d'une partie de la plaque bipolaire illustrée à la figure 2,
[Fig. 3b] la figure 3b est une vue en coupe d'une partie de la plaque bipolaire illustrée à la figure 2, une membrane de ladite cellule électrolytique étant également présente,
[Fig. 3c] la figure 3c est une vue en coupe d'une partie de la cellule électrolytique représentée à la figure 1,

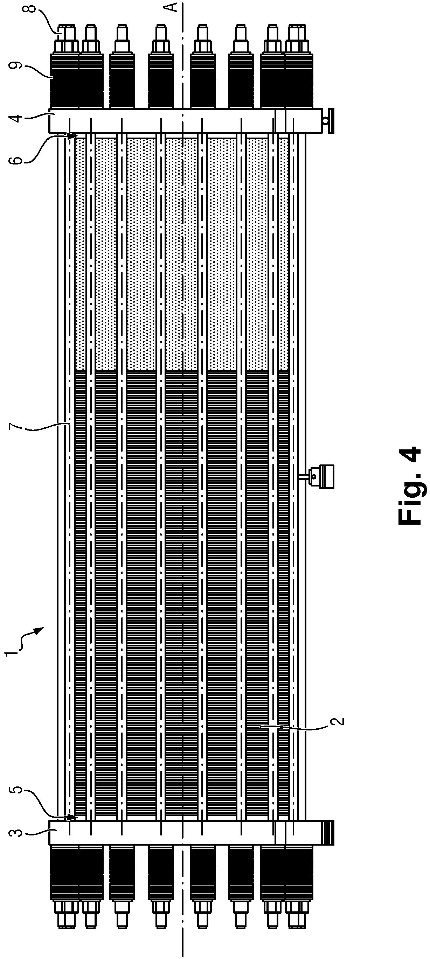

[Fig. 4] la figure 4 est une vue d'une pile d'électrolyseur comprenant des cellules électrolytiques comme illustrées à la figure 1,
[Fig. 5] la figure 5 est un graphique illustrant la réduction d'épaisseur moyenne d'un joint d'une des cellules de la pile d'électrolyseur illustrée à la figure 4 lors de l'assemblage de ladite pile.

### DETAILLEE DE L'INVENTION

En référence aux différentes figures, une pile d'éléments s'étend longitudinalement selon une direction générale A. Dans le cas présente, la pile d'éléments est une pile d'électrolyseur, les différents éléments étant majoritairement formés par des cellules électrolytiques qui seront décrites plus bas.

La pile d'électrolyseur 1 comporte un bloc 2 de cellules électrolytiques qui comprend au moins deux cellules électrolytiques qui sont montées accolées l'une à l'autre selon la direction générale A. Au sein du bloc 2, les cellules électrolytiques sont montées en parallèle d'un point de vue fluidique et en série d'un point de vue électrique.

Aux deux extrémités (selon la direction générale A) du bloc 2, la pile d'électrolyseur 1 comporte deux plaques de fond 3 et 4.

Ces plaques de fond 3 et 4 forment des supports entre lesquels les cellules électrolytiques sont comprimées afin que la pile d'électrolyseur 1 soit étanche et de sorte qu'un contact électrique de bonne qualité soit créé à l'intérieur des cellules électrolytiques.

En outre, les plaques de fond 3 et 4 permettent de supporter les efforts générés par la pression interne au bloc 2 ainsi que les efforts externes au bloc 2 nécessaires pour assurer la compression du bloc 2.

Les plaques de fond 3 et 4 peuvent jouer le rôle de conducteur électrique et de distributeur de courant.

De préférence, la pile d'électrolyseur 1 comporte une première plaque de distribution 5 associée à la première plaque de fond 3 et une seconde plaque de distribution 6 associée à la seconde plaque de fond 4. C'est alors les plaques de distribution 5 et 6 qui vont ici jouer le rôle de conducteur électrique et de distributeur de courant. La première plaque de distribution 5 (associée à la borne positive) est agencée en amont du bloc 2 et la seconde plaque de distribution 6 (associée à la borne négative) est agencée en aval dudit bloc 2.

Les notions " amont " et " aval " sont entendues selon le sens de circulation du courant à travers le bloc 2.

Une première des deux plaques de distribution 5 est connectée à la borne positive de la pile d'électrolyseur 1. Alors, une portion de la face principale interne de la première plaque de fond 3 (face principale tournée vers le bloc 2 et notamment la plaque de distribution 5) est recouverte d'une pastille en matériau électriquement isolant. Ladite portion est par exemple agencée au centre de ladite face principale interne.

La seconde des deux plaques de distribution 6 est connectée à la borne négative de la pile d'électrolyseur 1. La seconde plaque de fond 4 sera au même potentiel et sert également de passerelle pour l'alimentation d'une solution électrolytique et l'échappement de cette même solution chargée des gaz formés lors de l'électrolyse dans le bloc 2.

Ainsi, des trous sont ménagés dans ladite seconde plaque de fond 4. Lesdits trous présentent souvent une section différente entre les deux faces principales de la seconde plaque de fond 4. Par exemple la face principale externe (celle tournée vers l'extérieur du bloc 2) comporte un ou deux trou(s) (par exemple de formes cylindriques) pour l'alimentation en solution électrolytique et deux trous pour l'évacuation de produits de réaction électrolytique en plus de la solution électrolytique échauffée. Trois ou quatre trous sont percés sur la face principale interne (opposée à la face principale externe) de ladite seconde plaque de fond 4 dans le même but, et par exemple des trous de forme oblongue pour améliorer la répartition ou la collecte des fluides. Par exemple les trous de la face principale externe sont équipés de brides appropriées pour le raccordement des tuyaux d'arrivée et de retour de la solution électrolytique.

Par ailleurs, la pile d'électrolyseur 1 est ici alimentée en courant continu.

Par exemple la première plaque de distribution 5 présente un potentiel de sensiblement 700 Volts alors que la seconde plaque de distribution 6 présente un potentiel de 0 Volt. L'alimentation et les évacuations en solution électrolytique s'effectuent au niveau de la seconde plaque de distribution 6 et de la seconde plaque de fond 4, la plaque de distribution 6 ayant un potentiel de 0 Volt ce qui évite toute fuite de courant (le potentiel de la seconde plaque de distribution 6 étant celui de la terre) .

A l'intérieur de la pile d'électrolyseur 1, le courant traverse la solution électrolytique au travers d'une membrane 11 qui sera introduite plus bas. Au sein du bloc 2 sont présents des joints (qui seront décrits plus bas) : ces joints sont choisis dans un matériau présentant une résistance électrique beaucoup plus importante que celle de la solution électrolytique.

La pile d'électrolyseur 1 comporte un joint d'extrémité (non visible sur les figures) agencé entre la première plaque de distribution 5 et la première plaque de fond 3. Or la première plaque de fond 3 est à la terre de sorte que la différence de potentiel au niveau dudit joint d'extrémité atteint la même valeur que la tension appliquée entre les bornes positive et négative de la pile d'électrolyseur 1, par exemple, sensiblement de 700 Volts.

De ce fait, la première plaque de fond 3 est isolée électriquement du bloc 2.

Par exemple la pile d'électrolyseur 1 comporte une couche (non visible sur les figures) en matière électriquement isolante, couche agencée entre la première plaque de fond 3 et la première plaque de distribution 5.

La couche est par exemple un disque rapporté ou un dépôt effectué sur la première plaque de fond 3 et/ou la première plaque de distribution 5.

La pile d'électrolyseur 1 comporte des moyens de fixation des différentes cellules électrolytiques 10 entre elles par serrage commun.

Par exemple les moyens de fixation comportent une pluralité de tirants 7. Chaque tirant 7 s'étend rectilignement dans l'empilement d'électrolyseur 1. Chaque tirant 7 s'étend ainsi longitudinalement dans la pile d'électrolyseur 1 parallèlement à la direction générale A. Chaque tirant 7 est conformé en une tige.

Les tirants 7 s'étendent donc tous parallèlement entre eux.

Les tirants 7 se positionnent sur le pourtour des différentes cellules électrolytiques. De préférence, les tirants 7 sont répartis tout autour du bloc 2 et de préférence à un intervalle régulier.

Les tirants 7 s'étendent à travers les plaques de fond 3 et 4 de la pile d'électrolyseur 1, au travers de trous spécifiques desdites plaques de fond 3 et 4, et présentent ainsi chacun deux extrémités externes au bloc 2.

De préférence, les tirants 7 sont recouverts en partie d'un manchon en matière électriquement isolante. Ceci permet d'éviter les courts-circuits entre les cellules électrolytiques en cas de contact ou de projection. Par exemple le manchon s'étend sur tout le tronçon du tirant 7 agencé entre les deux plaques de fond 3 et 4.

De préférence, les extrémités des tirants 7 sont filetées.

Par exemple, les filets des extrémités sont des filets roulés. Les filets roulés auront l'avantage de rendre l'usinage des tirants 7 plus aisée notamment si les tirants 7 sont d'une longueur importante et par exemple une longueur de plusieurs mètres.

Les moyens de fixation comportent également des écrous 8 vissés sur les extrémités des tirants 7.

Les écrous 8 permettent de contraindre les deux plaques de fond 3 et 4 entre elles, et donc les différentes cellules électrolytiques entre elles, ce qui assure une bonne étanchéité de la pile de cellules électrolytiques. De préférence, les moyens de fixation comportent également des moyens de précontrainte des deux plaques de fond 3 et 4 entre elles et donc des différentes cellules électrolytiques entre elles. Lesdits moyens de précontrainte permettent également d'absorber les déformations et/ou les variations d'épaisseur des éléments constituant la pile d'électrolyseur 1, dues à la dilatation thermique ou aux variations des sollicitations mécaniques externes et internes à la pile d'électrolyseur 1 (comme par exemple la pression interne à la pile d'électrolyseur).

Les moyens de précontraintes sont reçues sur les extrémités des tirants 7 de sorte à être agencées, pour une extrémité donnée, entre la plaque de fond (3 ou 4) la plus proche et les écrous 8 agencés sur la même extrémité.

Par exemple les moyens de fixation comportent des rondelles ressorts 9 telle que des rondelles Belleville. Les rondelles ressorts 9 sont reçues sur les extrémités des tirants 7.

Les rondelles ressorts 9 sont plus précisément ici disposées sur chaque tirant 7, au niveau de la partie externe dudit tirant 7, lorsque cette dernière a traversé la plaque de fond (3 ou 4) la plus proche.

Les moyens de fixation ainsi décrits permettent à la pile d'électrolyseur 1 de faire face notamment aux dilatations thermiques et/ou variations des sollicitations mécaniques externes et internes à la pile d'électrolyseur 1 (comme par exemple la pression interne à la pile d'électrolyseur) .

Dans le cas présent, toutes les cellules électrolytiques de la pile d'électrolyseur 1 sont identiques entre elles de sorte que la description qui suit d'une cellule électrolytique 10 est également applicable à la description des autres cellules électrolytiques 10.

Une telle cellule électrolytique 10 comporte une membrane centrale 11 qui est encadrée par deux électrodes 12a et 12b (une anode et une cathode, respectivement) qui sont elles-mêmes encadrées par deux intercalaires 16 (ou " flow field material " en anglais) qui sont eux-mêmes encadrés par deux plaques bipolaires 14. Par ailleurs, la cellule électrolytique 10 comporte également un joint 13 (dont on a déjà évoqué l'existence plus haut) qui est comprimé entre les deux plaques bipolaires 14 de la cellule électrolytique 10.

La membrane 11, les intercalaires 16 et les électrodes 12a et 12b étant connus de l'art antérieur, ils ne seront pas détaillés ici.

Les deux plaques bipolaires 14 d'une cellule électrolytique 10 étant identiques entre elles, la description qui suit de l'une des plaques bipolaires 14 est également applicable à l'autre des plaques bipolaires 14 de la même cellule électrolytique 10. La plaque bipolaire 14 est dans un matériau apte à endurer l'environnement corrosif régnant à l'intérieur de la cellule électrolytique 10.

La plaque bipolaire 14 est par exemple à base de nickel et est par exemple en nickel ou en acier carbone nickelé. La plaque bipolaire 14 est en outre conformée de sorte à présenter deux faces principales : une première face principale tournée vers l'intérieur de la cellule électrolytique 10 considérée et une seconde face principale tournée vers l'extérieur de la cellule électrolytique 10 considérée.

On verra par la suite que les plaques bipolaires 14 sont asymétrique (selon un plan de symétrie passant par le centre de la plaque bipolaire considérée). En conséquence, au sein d'une même cellule électrolytique 10, la première face de la plaque bipolaire 14 qui est en train d'être décrite est en regard d'une deuxième face d'une autre plaque bipolaire 14 identique à celle qui est en train d'être décrite. Au sein du bloc 2, toutes les plaques bipolaires 14 sont orientées de la même manière. Par la suite on définit les axes X et Y qui forment un plan dans lequel s'étend l'une des faces principales de la plaque bipolaire 14 et l'axe Z qui est normal audit plan XY.

Lorsque la plaque bipolaire 14 est en place dans la cellule électrolytique 10 qui est elle-même en place dans la pile d'électrolyseur 1, l'axe Z est ici confondu avec la direction générale A.

L'épaisseur de la plaque bipolaire 14 (selon l'axe Z) est moins importante que ses autres dimensions.

La plaque bipolaire 14 est conformée de sorte à présenter une section transversale (dans un plan XY) dans une quelconque forme géométrique (de forme carrée, de forme rectangulaire, en disque ...). La plaque bipolaire présente ici une section transversale en disque.

Le pourtour externe de la plaque bipolaire 14 est défini par une première zone 21, une deuxième zone 22 et une troisième zone 23.

La première zone 21 s'étend ici sur toute la circonférence d'au moins l'une des faces principales de la plaque bipolaire 14. La première zone 21 est donc un anneau formant la périphérie externe de face principale.

La première zone 21 permet d'améliorer la résistance à la pression interne régnant au sein de la pile électrolytique 1 de la plaque bipolaire 14 et permet d'améliorer l'étanchéité de la cellule électrolytique 10 vis-à-vis de l'extérieur de la pile électrolytique 1. En particulier ladite première zone 21 permet de renforcer la résistance de la plaque bipolaire 14 notamment aux charges de pression radiale exercées sur la plaque bipolaire 14 (lorsque la cellule électrolytique 10 est agencée dans la pile électrolytique 1). Par exemple la première zone 21 est dimensionnée pour répondre à la norme applicable aux réservoirs sous pression et par exemple à la norme PED 2014/68/EU.

La première zone 21 est de préférence texturée. Par exemple la première zone 21 comporte des rainures, des stries, des aspérités, un aspect rugueux, ... au niveau d'au moins l'une des faces principales de la plaque bipolaire 14 et de préférence au niveau des deux faces principales de la plaque bipolaire 14.

En revanche le bord circulaire de la plaque bipolaire 14 (soit la surface reliant les deux faces principales de la plaque bipolaire 14 entre elles) est bien lisse i.e. non texturé.

La deuxième zone 22 s'étend par ailleurs circonférentiellement de sorte à être bordée extérieurement par la première zone 21. La deuxième zone 22 est coaxiale à la première zone 21.

La deuxième zone 22 s'étend ici sur toute la circonférence d'au moins l'une des faces principales de la plaque bipolaire 14. La deuxième zone 22 est donc un anneau.

La deuxième zone 22 est lisse i.e. non texturée.

Cette deuxième zone 22 est localisée autour des canaux d'alimentation en électrolyte et des canaux d'évacuation des produits gazeux issus de l'électrolyse.

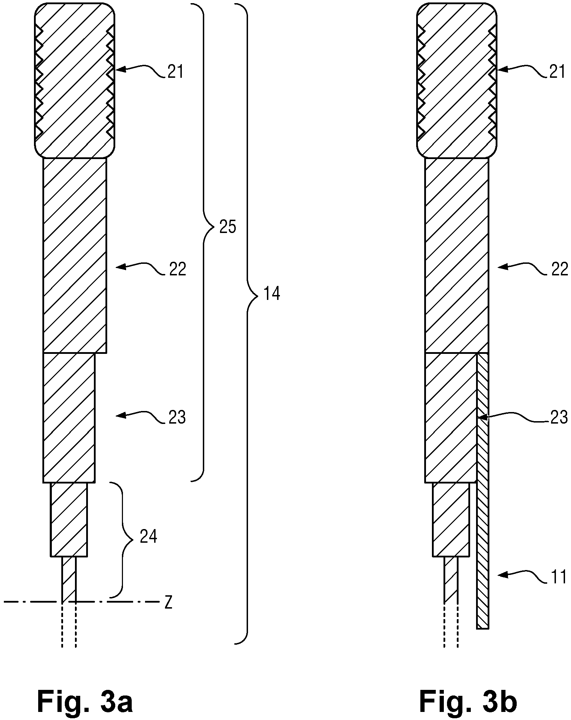

Cette deuxième zone 22 est moins épaisse (l'épaisseur étant considérée selon l'axe Z) que la première zone 21. Par exemple la plaque bipolaire 14 est conformée pour présenter au moins un épaulement entre la première zone 21 et la deuxième zone 22. De préférence, la plaque bipolaire 14 est conformée pour présenter deux épaulements entre les premières zone 21 et la deuxième zone 22. Ces deux épaulements sont ici identiques (comme visible à la figure 3a) et ménagés au niveau des deux faces principales de la plaque bipolaire 14.

La plaque bipolaire 14 est ainsi symétrique selon un plan de symétrie centrale parallèle aux axes X et Y au niveau de sa première zone 21 et de sa deuxième zone 22.

Le rétrécissement entre la première zone 21 et la deuxième zone 22 permet de réaliser une étanchéité différente entre les deux zones.

La troisième zone 23 s'étend par ailleurs circonférentiellement de sorte à être bordée extérieurement par la deuxième zone 22. La troisième zone 23 est coaxiale à la deuxième zone 22.

La troisième zone 23 s'étend ici sur toute la circonférence de la plaque bipolaire. La troisième zone 23 est un anneau.

Cette troisième zone 23 est moins épaisse (l'épaisseur étant considérée selon l'axe Z) que la deuxième zone 22. Par exemple la plaque bipolaire 14 est conformée pour présenter au moins un épaulement entre la deuxième zone 22 et la troisième zone 23.

De préférence, la plaque bipolaire 14 est conformée pour présenter un seul épaulement entre la deuxième zone 22 et la troisième zone 23. Cet épaulement est ménagé au niveau de la première face principale de la plaque bipolaire 14 soit celle tournée vers l'intérieur de la cellule électrolytique 10. Cet épaulement permet de loger la membrane 11.

De préférence, la deuxième zone 22 et la troisième zone 23 s'étendent dans le prolongement l'une de l'autre au niveau de la deuxième face principale de la plaque bipolaire 14.

Il n'y a donc pas d'épaulement entre la deuxième zone 22 et la troisième zone 23 au niveau de la deuxième face principale.

On comprend donc que la deuxième face de la plaque bipolaire 14 est dépourvue d'un tel épaulement de sorte que la deuxième face de l'autre plaque bipolaire de la cellule électrolytique considérée est dépourvue d'un tel épaulement. La membrane 11 est ainsi agencée entre les deux plaques bipolaires de sorte à loger uniquement dans l'épaulement de l'une des deux plaques bipolaires 14.

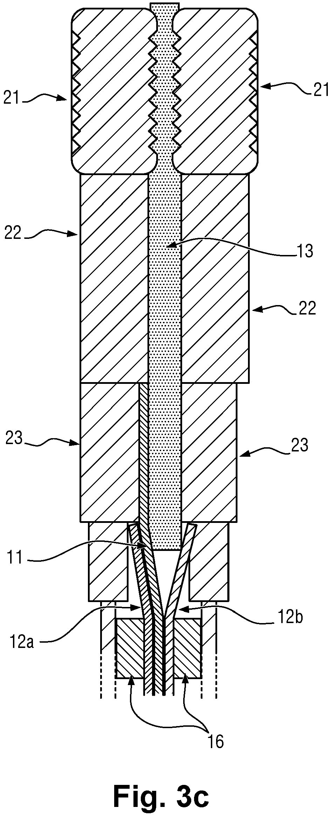

La plaque bipolaire 14 est ainsi asymétrique selon un plan de symétrie central parallèle aux axes X et Y si l'on considère les trois zones précitées (comme plus visible aux figures 3a et 3b et 3c).

La troisième zone 23 est entièrement lisse (i.e. non texturée) ou partiellement lisse ou entièrement texturée. De préférence, la troisième zone 23 est texturée au niveau de la première face principale de la plaque bipolaire 14. Ceci facilite le maintien en place de la membrane 11. Par exemple, au niveau de ladite première face principale, la troisième zone 23 comporte des rainures, des stries, des aspérités, un aspect rugueux ...

De préférence, la troisième zone 23 est lisse au niveau de la deuxième face principale de la plaque bipolaire 14. L'épaisseur de la plaque bipolaire 14 (selon l'axe Z) diminue donc au fur et à mesure des épaulements, au niveau de la jonction entre les premières et deuxième zones 21 et 22 mais également entre la deuxième zone 22 et la troisième zone 23. La plaque bipolaire 14 est ainsi plus épaisse au niveau de sa première zone 21 que de sa deuxième zone 22 que de sa troisième zone 23.

La première zone 21, la deuxième zone 22 et la troisième zone 23 forment conjointement une couronne 25. La couronne 25 forme ainsi la périphérie circonférentielle de la plaque bipolaire 14.

Une portion centrale 24 de la plaque bipolaire 14 s'étend par ailleurs de sorte à être bordée extérieurement par la troisième zone 23. La portion centrale 24 est coaxiale à la troisième zone 23.

La portion centrale 24 est pleine. La portion centrale 24 forme ainsi un plateau circulaire.

Cette portion centrale 24 est moins épaisse (l'épaisseur étant considérée selon l'axe Z) que la troisième zone 23. Par exemple la plaque bipolaire 14 est conformée pour présenter au moins un épaulement entre la troisième zone 23 et la portion centrale 24. De préférence, la plaque bipolaire 14 est conformée pour présenter deux épaulements entre la troisième zone 23 et la portion centrale 24. Ces deux épaulements sont ici identiques et ménagés au niveau des deux faces principales de la plaque bipolaire 14.

La portion centrale 24 peut optionnellement présenter elle-même au moins un épaulement de sorte que son épaisseur (l'épaisseur étant considérée selon l'axe Z) rétrécisse en direction du centre de la plaque.

La portion centrale 24 est donc la partie la plus fine (l'épaisseur étant considérée selon l'axe Z) de la plaque bipolaire 14.

La portion centrale 24 peut être lisse ou texturée.

La portion centrale 24 joue le rôle de collecteur de courant et va le transmettre aux intercalaires 16 qui sont de part et d'autre de celle-ci.

Par ailleurs, la plaque bipolaire 14 comporte des orifices 15 la traversant de part en part. Ces orifices 15 sont dédiés à l'alimentation en solution électrolytique et à l'échappement des produits d'électrolyse.

Par exemple, la plaque bipolaire 14 comporte entre trois et six orifices. Les orifices sont par exemple associés deux à deux, les couples de deux orifices étant répartis de manière homogène sur la circonférence de la plaque bipolaire 14. La plaque bipolaire peut ainsi comporter trois couples de deux orifices.

Par exemple, au moins l'un des orifices 15 est ménagé dans la deuxième zone 22. Dans le cas présent, tous les orifices 15 sont ménagés dans la deuxième zone 22.

Les orifices peuvent présenter une section transversale circulaire, oblongue ... ou d'une autre forme. Par exemple, au moins un des orifices 15 est de section transversale oblongue.

En réalité, le rôle de ladite portion centrale 24 n'est pas réellement de supporter de hauts efforts de pression au contraire de la couronne 25. La portion centrale 24 a ainsi principalement pour rôle de servir de support aux composants empilés au sein de la cellule électrolytique 10 à savoir les intercalaires 16, les électrodes 12a et 12b et la membrane 11. Les efforts sont donc égaux sur les deux faces de la portion centrale 24.

Les plaques bipolaires 14 présentent par conséquence une géométrie particulière. L'épaisseur de chaque zone précitée varie entre l'une et l'autre de quelques dixièmes de millimètres à plusieurs millimètres. L'épaisseur d'une zone précitée présente également une valeur variable sous l'effet de la dilatation thermique de la plaque bipolaire 14 (la variabilité de l'épaisseur de chaque zone due à la dilatation thermique variant ainsi également d'une zone à une autre).

Comme déjà indiqué au sein de la cellule électrolytique 10, les deux plaques bipolaires 14 compriment entre elles un joint 13.

Il convient de noter qu'au sein de la pile d'électrolyseur 1, toutes les plaques bipolaires 14 sont séparées deux à deux par un joint 13 (puisque chaque plaque bipolaire 14 joue le rôle de cathode pour une cellule électrolytique 10 et d'anode pour une autre cellule électrolytique 10 immédiatement adjacente).

De façon avantageuse les deux plaques bipolaires 14 compriment entre elles un unique joint 13.

De façon avantageuse tous les joints 13 des cellules électrolytiques 10 sont identiques au sein du bloc de cellules 2 de sorte que la description qui suit de l'un des joints 13 est également applicable aux autres joints 13 des autres cellules électrolytiques 10.

Les principales fonctionnalités du joint 13 sont les suivantes : i) assurer l'étanchéité de chaque cellule électrolytique 10 vis-à-vis de l'extérieur de la pile d'électrolyseur 1, ii) assurer l'étanchéité des canaux véhiculant un gaz qui est généré au sein du bloc 2 vis-à-vis de ceux véhiculant un autre gaz généré au sein du bloc 2, iii) assurer l'étanchéité des chambres sièges des réactions d'électrolyse où sont générés les deux gaz précités pour les isoler les unes des autres mais également assurer l'étanchéité vers les canaux cités juste avant, iv) agir comme une couche d'isolation électrique entre deux plaques bipolaires 14 adjacentes et v) définir l'épaisseur à laquelle sont comprimées les cellules électrolytique 10 selon la direction Z.

De façon avantageuse, un seul joint 13 est comprimé entre deux plaques bipolaires 14 adjacentes au sein d'une même cellule électrolytique 10.

De préférence, le joint 13 est conformé de sorte à présenter une section transversale (selon un plan de coupe transversal) carré ou rectangulaire.

Le joint 13 est donc dit " joint plat ".

De préférence le joint 13 est conformé de manière correspondante à la forme de la couronne 25 de la plaque bipolaire 14 associée.

Dans le cas présent, le joint 13 est globalement conformé en un anneau, la plaque bipolaire 14 associée étant en forme en disque.

On note que le joint 13 est percé d'une pluralité de trous.

Ceci permet d'assurer l'alimentation du bloc 2 et l'évacuation des fluides hors du bloc 2. Par exemple, les trous ménagés dans le joint 13 correspondent à ceux réalisés dans la zone 22 de la plaque bipolaire 14.

Le joint 13 est conformé pour présenter un diamètre (de sa section transversale) le plus constant possible sur toutes ses circonférences interne et externe et/ou une épaisseur (selon l'axe Z) la plus constante possible sur tout son tronçon (mais également d'un joint 13 à un autre) .

Ceci permet d'améliorer l'efficacité des cellules électrolytiques 10 de la pile d'électrolyseur 1.

En particulier, ceci permet d'avoir des faces du joint 13 parallèle possible entre elles et aux faces principales des plaques bipolaires 14 en regard.

Ceci permet encore davantage d'améliorer l'étanchéité de l'ensemble.

La tolérance sur les dimensions du joint 13 dépendra de l'application pour laquelle il est destiné (par exemple la tolérance est de +/-0.1 millimètre en épaisseur). Comme nous l'avons dit, et comme plus visible à la figure 3c, le joint 13 est comprimé entre deux plaques bipolaires 14 adjacentes et plus précisément entre les deux pourtours externes des faces principales en regard desdites plaques bipolaires 14 et plus précisément entre les deux couronnes 25 en regard desdites plaques bipolaires 14.

Du fait de la géométrie particulière des plaques bipolaires 14 au niveau de leur pourtour externe, et notamment de leur couronne 25, les plaques bipolaires 14 en comprimant le joint 13 viennent le déformer à son tour de sorte à délimiter et caractériser ledit joint 13 en trois portions distinctes.

En revanche, le joint 13 n'est pas comprimé entre les portions centrales 24 desdites deux plaques bipolaires 14.

Le diamètre du joint 13 (selon une section transversale) est tel que le joint 13 s'étend depuis le bord latéral des plaques bipolaires 14 jusqu'au raccordement entre les troisièmes zones 23 et les portions centrales 24 (en dépassant de préférences des troisièmes zones 23).

Ainsi, chaque portion du présent joint 13 remplit une fonction d'étanchéité distincte et est caractérisée par un niveau de compression spécifique, ce dernier variant d'une portion à l'autre. La conséquence physique et mécanique est la réduction d'épaisseur variable dudit joint 13 selon la portion considérée.

Ainsi lorsque le joint 13 est à l'état de repos, il se présente sous une forme annulaire classique et d'épaisseur initiale sensiblement unique.

Lorsque le joint 13 est comprimé entre deux plaques 14 : entre les premières zones 21 des deux plaques bipolaires 14, le joint 13 présente une première portion correspondante texturée du fait qu'il épouse la géométrie desdites premières zones 21,
entre les deuxièmes zones 22 des deux plaques bipolaires 14, le joint 13 présente une deuxième portion correspondante lisse, le joint 13 ayant alors également une épaisseur plus importante qu'au niveau de sa première portion, entre les troisièmes zones 23 des deux plaques bipolaires 14 et la membrane 11, le joint 13 présente une troisième portion correspondante lisse et/ou rainurée.

Au niveau de sa première portion, le joint 13 est directement compressé entre les deux premières zones 21 (sans composant intermédiaire).

Au niveau de sa deuxième portion, le joint 13 est directement compressé entre les deux deuxièmes zones 22 (sans composant intermédiaire).

En revanche de sa troisième portion, le joint 13 n'est pas directement compressé entre les deux troisièmes zones 23. En effet, la membrane 11 est également présente entre ces deux troisièmes zones 23. En conséquence, le joint 13 est compressé sur l'une de ses faces directement par l'une des troisièmes zones 23 et sur l'autre de ses faces directement par la membrane 11 qui est elle-même directement compressée par la troisième zone 23 de la plaque bipolaire 14 en vis-à-vis.

Au niveau de sa troisième portion, le joint 13 présente alors une épaisseur sensiblement inférieure à celle de sa deuxième portion, la membrane 11 comblant le reste de l'espace entre les deux troisièmes zones 23. L'étanchéité de la membrane 11 est ainsi obtenue.

Le joint 13 est ainsi réparti sur toute sa hauteur (selon l'axe X) entre ses trois portions et donc entre les trois zones des couronnes 25.

En conséquence, la partie de la cellule électrolytique 10 située au niveau des premières zones 21 des deux plaques bipolaires 14 et de la première portion du joint 13 permet d'éviter à la solution électrolyte ou des gaz de sortir de la pile d'électrolyseur 1, autrement dit elle est dédiée à assurer l'étanchéité de la cellule électrolytique 10 par rapport à l'environnement extérieur. Elle assure par exemple une étanchéité supérieure ou égale à 10-3 milligrammes par mètre par seconde - mg/(m*s) lorsque l'étanchéité est mesurée par l'intermédiaire d'un gaz hélium - et de préférence une étanchéité supérieure ou égale à 10-4 mg/(m*s).

Cette première partie est caractérisée par la présence de textures sur les plaques bipolaires 14 dans lesquelles le joint 13 se déforme. En particulier, le joint 13 peut en se déformant remplir les creux des premières portions des plaques bipolaires 14 et ainsi renforcer l'étanchéité de la cellule électrolytique 10. En effet ces textures constituent un obstacle supplémentaire aux gaz et autres substances en présence, pour trouver le chemin vers l'extérieur de la pile d'électrolyseur 1. Cette présence de textures joue également un rôle qui favorise le frottement entre les cellules électrolytiques 10 et donc l'auto-maintient de la pluralité de cellules d'électrolyse 10 empilées pour former le bloc 2. Cet avantage est renforcé lorsque le bloc se retrouve à l'horizontal en fonctionnement.

Par exemple, la compression du joint 13 est telle que le joint 13 atteint au niveau de la première partie une épaisseur (selon l'axe Z) maximale de 94% et de préférence de 78% et de préférence de 75% de son épaisseur de départ (quand il est dans son état de repos à plat sur une surface plane sans contrainte externe). L'épaisseur de départ est par exemple égale ou supérieure à 3,0 millimètres. De préférence, cette épaisseur de départ ne dépasse pas 3,5 millimètres.

La deuxième partie de la cellule électrolytique 10 située au niveau des deuxièmes zones 22 des deux plaques bipolaires 14 et de la deuxième portion du joint 13 permet d'éviter un échange entre les canaux véhiculant l'hydrogène et l'oxygène dans la cellule électrolytique 10 ou depuis la cellule électrolytique 10 elle-même (à partir de la troisième zone 23 et de la portion centrale 24) vers ces dits canaux.

Par exemple, la compression du joint 13 est telle que le joint 13 atteint au niveau de la deuxième partie une épaisseur (selon l'axe Z) comprise entre 92 et 97 % de son épaisseur de départ (quand il est dans son état de repos à plat sur une surface plane sans contrainte externe) et de préférence une épaisseur de 92 % de son épaisseur de départ. Dans tous les cas, le joint 13 est moins comprimé qu'au niveau de la première partie et présente donc une épaisseur plus importante qu'au niveau de la première partie.

L'élargissement du joint 13 entre les premières zones 21 et les deuxièmes zones 22 permet de réaliser une étanchéité différente entre les premières zones 21 et les deuxièmes zones 22. En particulier, l'étanchéité entre les premières zones 21 et les deuxièmes zones 22 est de bonne qualité.

La troisième partie de la cellule électrolytique 10 située au niveau des troisièmes zones 23 des deux plaques bipolaires 14 et de la troisième portion du joint 13 permet d'accueillir la membrane 11 comme cela a déjà été indiqué.

Cette troisième partie assure donc l'étanchéité entre les compartiments anodiques et cathodiques de la cellule électrolytique 10.

On note donc que la membrane 11 comme le joint 13 sont alors comprimés entre les deux plaques bipolaires 14 au niveau de cette troisième partie : le joint 13 se superpose ainsi à la membrane 11 sur cette partie de la cellule électrolytique 10.

Ceci assure une très bonne étanchéité autour de la membrane 11 sur son périmètre et en direction des canaux d'alimentation et d'extraction des fluides.

La troisième portion du joint 13 définit ainsi une troisième zone de compression visant à maintenir la membrane 11 et à assurer son étanchéité sur son périmètre.

Par exemple, la compression du joint 13 est telle que le joint 13 atteint au niveau de la troisième partie une épaisseur (selon l'axe Z) comprise entre 86 à 92 % de son épaisseur de départ (quand il est dans son état de repos à plat sur une surface plane sans contrainte externe) et de préférence une épaisseur comprise entre 88 et 92% de son épaisseur de départ et de préférence une épaisseur de 90 % de son épaisseur de départ.

Selon un autre aspect, le joint 13 est en matière monomère ou en matière polymère et par exemple en matière plastique.

Par exemple, le joint 13 est dans un matériau de type polytétrafluoroéthylène ou polytétrafluoroéthène (communément abrégé PTFE ou plus connu sous la dénomination commerciale Teflon - marque déposée).

De préférence, le matériau est en ou à base ou de type polytétrafluoroéthylène ou polytétrafluoroéthène additionné d'au moins une charge. Par exemple la charge est de la fibre de verre.

Par exemple, ledit matériau est du polytétrafluoroéthylène renforcé. Par exemple le polytétrafluoroéthylène renforcé est du polytétrafluoroéthylène renforcé en fibres de verre ou le polytétrafluoroéthène renforcé est du polytétrafluoroéthène renforcé en fibres de carbone. Les propriétés de joint 13 décrit sont définies ci-après
- bon comportement du matériau et conservation de ses bonnes propriétés mécaniques à la température de fonctionnement de la cellule électrolytique 10 qui est pourtant importante (typiquement de l'ordre de 90 à 95 degrés Celsius) et ce sur le long terme ;
- résistance à l'environnement corrosif à l'intérieur de la cellule électrolytique 10 et ce sur le long terme ;
- bonnes propriétés d'étanchéité ;
- bonnes propriétés d'isolation électrique (données par une bonne résistance électrique) et ce même à la température de fonctionnement et au contact de la solution d'électrolyte ;
- peu de fluage permet une bonne longévité de la pile de cellules électrolytiques 10 ;
- léger comportement de fluage tout de même afin d'épouser au mieux les particularités géométriques de la zone 21 d'assise du joint 13
- uniformité de l'épaisseur (selon l'axe Z).

Selon une option, le joint d'extrémité agencé entre la première plaque de distribution 5 et la première plaque de fond 3 est dans le même matériau que le joint 13 d'une cellule électrolytique 10 qui vient d'être décrit. Le joint d'extrémité est par exemple identique audit joint 13. Ledit joint d'extrémité est optionnellement en matière monomère ou en matière polymère et par exemple en matière plastique.

Selon une option, la couche en matériau électriquement isolant entre la première plaque de fond 3 et la première plaque de distribution 5 est dans le même matériau que le joint d'extrémité agencé entre la première plaque de distribution 5 et la première plaque de fond 3. Selon une option, la couche en matériau électriquement isolant entre la première plaque de fond 3 et la première plaque de distribution 5 est dans le même matériau que ledit joint 13. Ladite couche est optionnellement en matière monomère ou polymère et par exemple en matière plastique. Selon une option, le joint d'extrémité agencé entre la seconde plaque de distribution 6 et la seconde plaque de fond 4 est dans le même matériau que le joint 13 d'une cellule électrolytique 10 qui vient d'être décrit. Ledit joint d'extrémité est par exemple identique audit joint 13. Ledit joint d'extrémité est optionnellement en matière monomère, en matière polymère et par exemple en matière plastique.

Selon une option, la pastille agencée sur la face interne de la première plaque de distribution 5 est une couche de matériau directement rapportée sur la première plaque de distribution 5 ou est formée par dépôt de poudre (par dépôt de Halar (marque déposée) par exemple).

La cellule électrolytique 10 ainsi décrite présente une très bonne étanchéité du fait de la compression spécifique du joint 13 entre les plaques bipolaires 14.

On note par ailleurs que la cellule électrolytique 10 est rendue étanche grâce à un unique joint 13 et ce avec trois zones d'étanchéité et de compression différentes. Le recours à un joint 13 unique en matière plastique (et non plus en élastomère comme dans l'art antérieur) permet en outre d'améliorer l'étanchéité de de la pile d'électrolyseur.

En effet le joint 13 résiste mieux, et ce même sur une longue durée, à l'environnement corrosif régnant à l'intérieur de la pile d'électrolyseur- 1.

Le joint 13 est ainsi dans un matériau dur et résistant aux fortes compressions mécaniques auxquelles est soumis la pile d'électrolyseur.

On va à présent décrire un procédé d'assemblage de la pile d'électrolyseur 1.

Selon une première étape, on construit individuellement des sous-ensembles, chaque sous-ensemble étant composé en assemblant deux intercalaires 16 et deux électrodes 12a, 12b de part et d'autre d'une plaque bipolaire 14. Chaque sous-ensemble constitue à proprement parler deux demi-cellules électrolytiques accolées.

Dans une deuxième étape, lesdits sous-ensembles sont empilés successivement, séparés l'un de l'autre par une membrane 11 et un joint 13, formant lesdites cellules électrolytiques 10 connectées électriquement en série. La dernière cellule électrolytique 10 d'une extrémité du bloc 2 est couverte par la seconde plaque de distribution 6, elle-même recouverte par la seconde plaque de fond 4 et la dernière cellule électrolytique 10 de l'autre extrémité du bloc 2 est couverte par la première plaque de distribution 5, elle-même recouverte par la première plaque de fond 3, délimitant ainsi la pile d'électrolyseur 1.

Lors d'une troisième étape, la pile d'électrolyseur 1 nouvellement assemblée est mise en compression grâce aux tirants 7, écrous 8 et rondelles ressorts 9.

A cet effet, on effectue un pré-serrage de la pile d'électrolyseur 1 (et donc des différentes couches de la cellule électrolytique 10 entre elles ainsi que des joints 13).

Cette troisième étape est effectuée de préférence à température ambiante. Par exemple cette troisième étape est effectuée à une température comprise entre 15 et 25 degrés Celsius et par exemple entre 18 et 22 degrés Celsius.

Le pré-serrage est obtenu par exemple en agissant sur les écrous 8 des tirants 7. De préférence, plusieurs écrous 8 sont serrés simultanément. De préférence, les écrous 8 sont tous regroupés par groupe, chaque groupe étant serré l'un après l'autre et les écrous au sein d'un même groupe étant serrés simultanément. De préférence le serrage des groupes se pratique en quinconce ou en étoile. On pourra par exemple serrer un groupe d'écrous 8 en même temps, avant de passer au groupe suivant dont les écrous se situent le plus près possible des écrous du premier groupe 8, et ainsi de suite. De préférence, au cours de cette phase tous les écrous 8 sont serrés.

Au cours de la troisième étape, on agit ainsi sur plusieurs écrous 8 à la fois mais tous les écrous 8 du bloc ne sont pas serrés en même temps.

Ceci permet d'assurer une réduction des épaisseurs des joints 13 d'une manière relativement homogène et uniforme sur toute la circonférence des différents joints.

Le pré-serrage peut être réalisé par exemple par l'intermédiaire de moyens hydrauliques et par exemple des vérins hydrauliques.

Durant cette troisième étape, de préférence, on serre la pile d'électrolyseur pour atteindre un seuil caractéristique d'un taux de compression initial visé d'au moins l'un des joints 13 et de préférence de tous les joints 13.

Ce seuil peut être défini, par exemple, au moins à l'une des conditions suivantes :
- au moins l'une des joints (et de préférence tous les joints 13), à la fin de la première phase, doivent assurer un contact entre les deux plaques bipolaire 14 et la membrane 11 au sein d'une cellule donnée, et/ou
- au moins l'un des joints (et de préférence tous les joints 13), à la fin de la première phase, doivent présenter un taux de compression compris entre 25 et 50 % d'un taux de compression final visé d'au moins l'un des joints 13 et de préférence de tous les joints 13.

Le seuil peut être ainsi une épaisseur cible d'au moins l'un des joints ou bien encore une épaisseur cible de plusieurs joints ou bien encore une épaisseur cible de la pile d'électrolyseur 1 ou bien encore un effort de serrage cible de la pile d'électrolyseur. Pour estimer si l'on se rapproche du seuil, on mesure de manière correspondante au cours de la première phase par exemple une épaisseur d'au moins l'un des joints ou bien encore une épaisseur de la pile d'électrolyseur ou bien encore l'effort de serrage appliqué à la pile d'électrolyseur. De façon particulière, cette troisième étape comporte une suite de session de serrage afin que le serrage de la pile d'électrolyseur s'effectue par palier. De préférence, on estime à la fin de chaque palier à quelle distance on se trouve du seuil pour commander l'effort de serrage sur le palier suivant.

Lors d'une quatrième étape, la pile d'électrolyseur 1, et donc le bloc 2, sont soumis ensuite à des cycles de serrage successifs.

Un cycle de serrage comporte les phases suivantes.

Première phase : Chauffage de la pile d'électrolyseur 1. Cette première phase s'effectue par exemple par injection d'un gaz ou d'un liquide (comme de la vapeur, et par exemple de la vapeur d'eau, ou un liquide chaud, et par exemple de l'eau chaude) par une partie des orifices d'entrées et de sortie de la plaque de fond 4 pour chauffer tout l'intérieur de la pile d'électrolyseur 1, et en particulier les joints 13. Alternativement le gaz ou le liquide pourront être à température ambiante à l'intérieur de la pile d'électrolyseur. Par exemple des moyens de chauffe pourront être temporairement introduits dans la pile d'électrolyseur 1 afin de chauffer le gaz ou le liquide (par exemple les moyens de chauffe pourront comporter une ou des résistances). Optionnellement, les moyens de chauffe seront introduits temporairement dans la pile d'électrolyseur 1 par les orifices 15 des plaques bipolaires 14.

Deuxième phase : Serrage de la pile d'électrolyseur 1 (et donc des différentes couches de la cellule électrolytique 10 entre elles ainsi que des joints 13).

Le serrage est obtenu par exemple en agissant sur les écrous 8 des tirants 7. De préférence, plusieurs écrous 8 sont serrés simultanément. De préférence, les écrous 8 sont tous regroupés par groupe, chaque groupe étant serré l'un après l'autre et les écrous au sein d'un même groupe étant serrés simultanément. De préférence le serrage des groupes se pratique en quinconce ou en étoile. On pourra par exemple serrer un groupe d'écrous 8 en même temps, avant de passer au groupe suivant dont les écrous se situent le plus près possible des écrous du premier groupe 8, et ainsi de suite. De préférence, au cours de cette phase tous les écrous 8 sont serrés.

Au cours de la deuxième phase, on agit ainsi sur plusieurs écrous 8 à la fois mais tous les écrous 8 du bloc ne sont pas serrés en même temps.

Ceci permet d'assurer une réduction des épaisseurs des joints 13 d'une manière relativement homogène et uniforme sur toute la circonférence des différents joints.

Le serrage peut être réalisé par exemple par l'intermédiaire de moyens hydrauliques et par exemple des vérins hydrauliques.

On comprend que le serrage s'effectue à chaud du fait de la phase précédente et non plus à température ambiante comme dans la troisième étape.

Troisième phase : Refroidissement de la pile d'électrolyseur 1.

Ce refroidissement peut être naturel (par arrêt du chauffage de la pile d'électrolyseur 1, celle-ci étant au contact de l'air à température ambiante qui va permettre un refroidissement naturel de celle-ci) et/ou forcé [par exemple par injection d'un gaz ou d'un liquide (comme de l'eau froide) par une partie des orifices d'entrées et de sortie de la plaque de fond 4 pour refroidir tout l'intérieur de la pile d'électrolyseur 1, et en particulier les joints 13 / par ventilation / etc.].

Quatrième phase : Serrage de la pile d'électrolyseur 1 et donc des différentes couches des cellules électrolytiques 10 et des joints 13.

Ce resserrage s'effectue comme la deuxième phase mais à température ambiante comme dans la troisième étape de pré-serrage (les intervalles de températures indiqués pouvant également être appliqués ici).

On réalise ainsi au cours de la quatrième étape une suite de serrages à chaud puis à température ambiante de la pile d'électrolyseur 1, et donc du bloc 2. Etant donné que le serrage à chaud s'effectue à une température plus importante que le serrage à température ambiante, on peut également dire que l'on réalise une suite de serrages à chaud puis à froid de la pile d'électrolyseur 1, et donc du bloc 2.

La deuxième phase (en particulier lors de sa première itération si les phases 1 à 4 sont répétées plusieurs fois) permet une réduction significative de l'épaisseur individuelle des différents joints 13.

Les phases 1 à 4 sont répétées de nouveau de préférence jusqu'à atteindre un seuil caractéristique d'un taux de compression final visé d'au moins l'un des joints 13 et de préférence de tous les joints 13.

Le seuil peut être défini, par exemple, en tenant compte
- de la performance d'étanchéité visée sur au moins l'un des joints 13, et de préférence tous les joints, et de préférence de la pile électrolytique 1 dans son ensemble, et/ou
- de la compression géométrique visée de la pile électrolytique 1 de sorte que les contacts électriques soient satisfaisants pour atteindre un rendement donné et/ou une continuité électrique donné, et/ou
- de la stabilité mécanique visé du matériau composant le ou les joints 13 de sorte que le phénomène de fluage ne vienne pas pénaliser outre mesure l'étanchéité de la pile électrolytique 1.

De préférence le seuil précité est lié à au moins un taux de compression d'au moins l'un des joints 13 et de préférence de tous les joints 13.

De préférence le seuil précité est lié à au moins le taux de compression de la portion d'au moins l'un des joints 13 (et de préférence de tous les joints 13) liée aux premières zones 21 des plaques bipolaires 14 en regard.

Plus précisément encore, le seuil précité est lié aux taux de compression, définis plus haut dans la demande, liés aux différentes portions d'au moins l'un des joints et de préférence de tous les joints 13.

Il faut noter que dès la première itération, les joints 13 présentent une épaisseur proche de leur valeur cible. Les itérations suivantes visent ainsi davantage la disparition du comportement plastique des joints sur leur domaine d'utilisation.

De préférence, on mesure après chaque phase de serrage (deuxième phase et quatrième phase) au moins un paramètre parmi les paramètres suivants : une épaisseur d'au moins l'un des joints, une épaisseur de la pile d'électrolyseur ou du bloc, une distance entre les plaques de fond 3 et 4, un effort de serrage appliqué à la pile d'électrolyseur. Par exemple, après chaque phase de serrage, l'épaisseur de tous les joints 13 est estimée par mesure de la distance entre les plaques de fond 3 et 4 ou de l'effort de serrage appliqué à la pile d'électrolyseur 1.

Rôle1 Ceci permet de piloter la répétition des phases 1 à 4 en estimant la progression jusqu'au seuil final. Par exemple le seuil final est une valeur d'épaisseur cible de la pile d'électrolyseur 1. Par exemple, après chaque phase de serrage, on contrôle l'épaisseur de la pile d'électrolyseur 1. Optionnellement on mesure l'épaisseur du bloc 2 en mesurant l'épaisseur entre les plaques de fond 3 et 4 et ce en différents points de la circonférence du bloc 2 ; puis on moyenne les différentes valeurs obtenues obtenir une épaisseur moyenne du bloc 2 ; à partir du nombre de cellules et de l'épaisseur des différents éléments par cellules on en déduit l'épaisseur moyenne de chacun des joints 13). On en déduit un rapport Hn+1/Hn avec Hn le delta d'épaisseur à effectuer pour atteindre l'épaisseur cible (ici le seuil final) suite à la phase de serrage qui vient d'être effectuée et Hn+1 le delta d'épaisseur à effectuer pour atteindre cette épaisseur cible lors de la phase de serrage suivante. Ce rapport permet de suivre la progression de la quatrième étape. De préférence, la quatrième étape est mise en oeuvre de sorte que ce rapport soit maintenu dans une plage donnée tout au long de la quatrième étape. De préférence lorsque la deuxième phase est mise en oeuvre pour la première fois, on vise un rapport Hn+1/Hn inférieur à 0.5 (signifiant que le delta d'épaisseur a été réduit de plus 50%) et de préférence inférieur à 0.4 (signifiant que le delta d'épaisseur a été réduit de plus 60%). Par exemple on vise un rapport Hn+1/Hn compris entre 0,5 et 0,25 et de préférence compris entre 0.4 et 0.25.

### Rôle 2

Ceci permet d'estimer les zones de la pile d'électrolyse 1 d'épaisseurs anormalement plus élevées que les autres zones de ladite pile. Dès lors, lors de la phase de serrage suivante, il est possible d'adapter le serrage en ciblant les écrous via lesquels il est nécessaire d'effectuer un serrage privilégié pour résorber une zone d'épaisseur anormalement plus élevée que les autres zones de la pile d'électrolyseur 1. On peut ainsi corriger un défaut de parallélisme des plaques bipolaires 14 et/ou des cellules au cours des différentes phases de serrage. Ceci est primordial pour assurer au final un bon contact électrique entre les différentes cellules électrolytiques 5 sur toute la surface desdites cellules. Ceci permet également de conserver une pile d'électrolyse 1 la plus rectiligne et la plus centrée possible sur son axe Z. Ceci permet également d'avoir les plaques de fond 3 et 4 bien alignées et parallèles entre elles. Par exemple, les inventeurs ont pu constater qu'un éventuel défaut de parallélisme entre les plaques de fond 3 et 4 était inférieur au millimètre pour une pile d'électrolyte de 5 mètres de long (longueur prise sur l'axe Z).

De préférence, le premier rôle et/ou le deuxième rôle sont également mis en oeuvre pour la troisième étape de pré-serrage.

De préférence, le chauffage du joint 13 se fait par vapeur (par étuvage). Ceci permet de pouvoir transporter une grande quantité d'énergie par une quantité de fluide réduite et correspondante à la taille des canaux. Plus précisément toujours, l'épaisseur du joint 13 se réduit de manière permanente pour atteindre les taux de compression prédéfinis. Par ailleurs, le comportement plastique (ou fluage) dudit joint 13 est atténué au fil des cycles de serrage à chaud et à température ambiante jusqu'à atteindre une plage de comportement élastique. De la sorte le joint 13 présente à l'issue de cette quatrième étape un comportement de déformation linéaire. Ce dernier permet (grâce à l'effort de contre-balancement induit par les rondelles élastiques 9) d'assurer une étanchéité pour les différentes zones des plaques bipolaires 14 notamment au vu des dilatations et les efforts de pression appliqués à la pile d'électrolyseur 1.

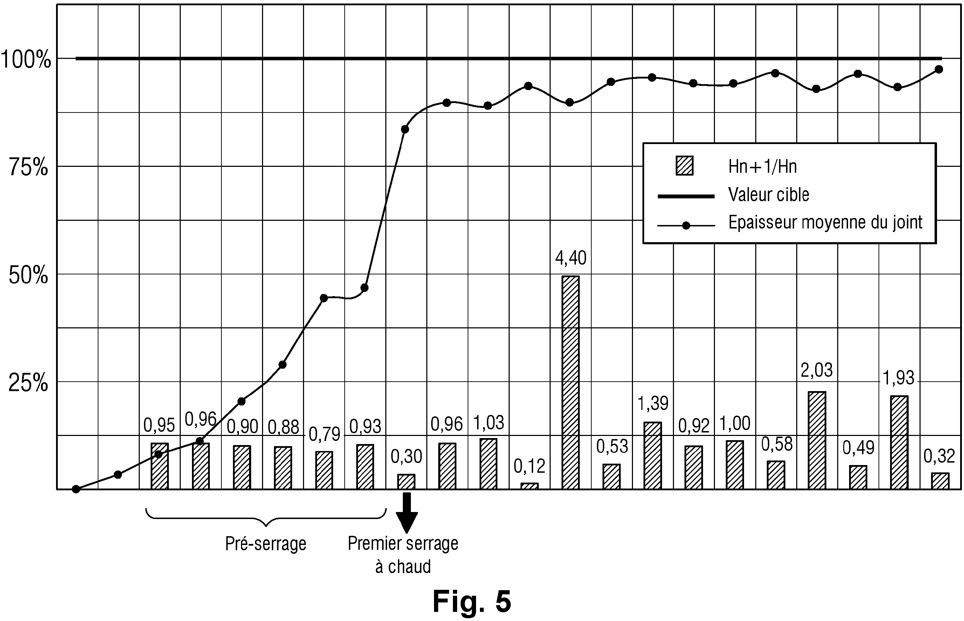

On défait ainsi le joint 13 de son caractère plastique. On réduit donc progressivement mais drastiquement l'épaisseur (selon l'axe Z) du joint 13 par déformation plastique dudit joint 13. La figure 5 permet de visualiser cette réduction d'épaisseur du joint 13 au cours des différentes étapes et phases du procédé d'assemblage décrit. La courbe illustre ainsi l'évolution de l'épaisseur moyenne du joint 13 (déterminée comme indiqué ci-dessus ou par une autre méthode) au cours des différentes étapes et phases du procédé d'assemblage décrit, la valeur 100% correspondant à la réduction d'épaisseur cible.

Par exemple, au moins sur certaines portions du joint 13, l'épaisseur du joint 13 est réduite d'au moins 10% voire d'au moins 15% voire d'au moins 20% voire d'au moins 25%. Ceci permet de limiter le fluage des joints 13 lors du fonctionnement réel de la pile d'électrolyseur 1.

De la sorte, les joints 13 assurent une très bonne étanchéité à la pile d'électrolyseur 1, même dans le temps à l'échelle de 10 ou 20 ans.

De façon astucieuse une partie des serrages est effectuée à chaud ce qui permet de bénéficier du caractère plus doux (moins dur) du matériau du joint 13 à hautes températures.

Un tel montage avec des plaques de distribution 5 et 6 épaisses et des plaques bipolaires 14 fines et planes permet une homogénéité du courant dans toutes les cellules électrolytiques 10 de la pile d'électrolyseur 1 alors que la tension est différente aux bornes de chaque cellule électrolytique 10 et que le courant n'est connecté qu'à un ou des point(s) à la périphérie de chaque plaque de distribution 5 et 6.

En outre, les plaques bipolaires 14 sont bien parallèles entre elles au sein du bloc 2 grâce à leur forme particulière et au bon serrage de chaque joint 13. Ceci améliore encore davantage l'homogénéité du courant dans toutes les cellules électrolytiques 10.

Le procédé d'assemblage qui a été décrit permet notamment à chaque joint 13 :
- de se déformer suivant la géométrie imposée par les plaques bipolaires l'enserrant,
- de s'enfoncer dans les textures des premières zones 21 afin de les combler,
- de faire vieillir volontairement et prématurément le matériau le composant,
- d'éliminer au mieux le comportant plastique le composant,
- faire entrer son matériau dans une plage de comportement élastique (centrée sur un point de fonctionnement de la pile d'électrolyseur).
- d'atteindre la valeur de serrage désirée réunissant à la fois les étanchéités voulues ainsi que les contacts électriques entre les différents composants permettant d'atteindre les performances énergétiques envisagées.

A la fin de la quatrième étape, la température et la pression régnant à l'intérieur de la pile d'électrolyseur 1 pourront évoluer mais les joints resteront avantageusement toujours dans le domaine élastique obtenu. Le point de fonctionnement nominale de la pile d'électrolyseur est par exemple de 85 degrés Celsius sous 3 Mégapascals. Bien entendu, l'invention n'est pas limitée au mode de réalisation décrit mais englobe toute variante entrant dans le champ de l'invention telle que définie par les revendications.

Le procédé d'assemblage décrit s'appliquera avantageusement à tous les types de pile d'électrolyseur 1, peu importe leurs caractéristiques thermiques et mécaniques, leur nombre, leur taille ou la nature du matériau constituant ladite pile d'électrolyseur 1.

Le ou les joints d'extrémité pourront être différents des joints 13.

La pile d'électrolyseur 1 pourra être assemblée différemment de ce qui a été décrit.

Bien qu'ici on refroidisse la pile électrolytique (naturellement et/ou de manière forcée) jusqu'à température ambiante, on pourra refroidir la pile électrolytique à une valeur supérieure à la température ambiante. Par exemple on pourra refroidir la pile électrolytique de sorte que sa température soit inférieure à 35 degrés Celsius et par exemple comprise entre 15 et 35 degrés Celsius et par exemple comprise entre 20 et 35 degrés Celsius. Le resserrage à froid pourra ainsi s'effectuer à une température différente entre deux resserrages à froid successifs (à condition donc que la pile électrolytique soit à une température inférieure à celle du resserrage à chaud et proche de la température ambiante sans descendre préférentiellement sous les 15° degrés Celsius ce qui pourrait entraver la plasticité du matériau des joints) et/ou à une température différente que la première phase de serrage.

Bien qu'ici le procédé d'assemblage permette d'assembler une pile électrolytique, le procédé d'assemblage pourra permettre d'assembler d'autres piles d'éléments comme par exemple un échangeur thermique, une presse, un filtrepresse ... et de préférence sur des piles d'éléments devant être utilisés sur de grandes périodes et/ou nécessitant des niveaux d'étanchéité importants.

La pile d'éléments pourra être utilisée à l'horizontale, à la verticale ou dans une tout autre position. La pile d'éléments pourra être assemblée à l'horizontale, à la verticale ou dans une tout autre position. De préférence la pile d'élément sera assemblée verticalement et utilisée horizontalement.

## Revendications

1. Procédé d'assemblage d'une pile d'éléments, comprenant les étapes de :
- Assembler individuellement des sous-ensembles desdits éléments,
- Assembler les sous-ensembles entre eux en agençant un joint entre chaque sous-ensemble pour former la pile d'éléments,
- Appliquer des phases successives de chauffage et de refroidissement à la pile d'éléments en appliquant au moins un serrage de la pile d'éléments entre deux phases différentes de chauffage et de refroidissement.

2. Procédé selon la revendication 1, dans lequel la pile d'éléments est une pile d'électrolyseur, les sous-ensembles étant ainsi des couples de demi-cellules électrolytiques.

3. Procédé selon l'une des revendications précédentes, comprenant une étape de pré-serrage de la pile d'éléments avant l'étape d'application des phases successives de chauffage et de refroidissement à la pile d'éléments en appliquant au moins un serrage de la pile d'éléments entre deux phases différentes de chauffage et de refroidissement.

4. Procédé selon la revendication 3, dans lequel l'étape de pré-serrage s'effectue par paliers.

5. Procédé selon l'une des revendications précédentes, dans lequel on chauffe les éléments par injection de vapeur dans les éléments.

6. Procédé selon la revendication 5, dans lequel la vapeur est de la vapeur d'eau.

7. Procédé selon l'une des revendications 1 à 4, dans lequel, on chauffe les éléments (10) par injection d'eau chaude dans les éléments.

8. Procédé selon l'une des revendications précédentes, dans lequel le refroidissement des éléments est forcé.

9. Procédé selon l'une des revendications précédentes, dans lequel le refroidissement des éléments est naturel.

10. Procédé selon l'une des revendications précédentes, dans lequel on effectue au moins deux itérations des phases suivantes :
- Chauffage de l'intérieur de la pile d'éléments,
- Serrage des différents éléments entre eux,
- Refroidissement des différents éléments entre eux,
- Serrage des différents éléments entre eux.

11. Procédé selon la revendication 10, dans lequel on arrête les itérations lorsqu'au moins un taux de compression prédéfini d'au moins un joint de la pile d'élément est atteint.

12. Procédé selon l'une des revendications précédentes, dans lequel au moins un sous-ensemble est assemblé par fixation de deux plaques bipolaires (16) entre elles de sorte à serrer au moins un joint (13) entre les deux plaques.

13. Procédé selon la revendication 12, dans lequel un unique joint est serré entre les deux plaques bipolaires.

14. Procédé selon l'une des revendications précédentes, dans lequel la pile d'élément est agencée verticalement et/ou horizontalement.
